(19) Europäisches Patentamt
European Patent Office
Office européen des brevets

(11) **EP 2 221 688 B1**

(12) **EUROPÄISCHE PATENTSCHRIFT**

(45) Veröffentlichungstag und Bekanntmachung des Hinweises auf die Patenterteilung:
**12.12.2012   Patentblatt 2012/50**

(51) Int Cl.:
***G05B 19/18*** *(2006.01)*        ***G05B 19/416*** *(2006.01)*

(21) Anmeldenummer: **09152904.0**

(22) Anmeldetag: **16.02.2009**

(54) **Verfahren und Steuereinrichtung zur Steuerung der Drehzahl eines rotierenden Werkzeugs bei einer Werkzeugmaschine**

Control device and method for controlling the rotation speed of a rotating tool in a machine tool

Procédé et dispositif de commande destinés à la commande du couple d'un outil rotatif dans une machine-outil

(84) Benannte Vertragsstaaten:
**DE**

(43) Veröffentlichungstag der Anmeldung:
**25.08.2010   Patentblatt 2010/34**

(73) Patentinhaber: **Siemens Aktiengesellschaft 80333 München (DE)**

(72) Erfinder:
• **Hertinger, Klaus 91056 Erlangen (DE)**
• **Stiehler, Horst 09217 Burgstädt (DE)**
• **Uhlich, Andreas 90530 Wendelstein (DE)**

(56) Entgegenhaltungen:
DE-A1- 3 828 594      DE-A1- 4 405 660
US-A- 5 309 074       US-A- 5 562 523
US-A- 5 827 020       US-A- 6 106 373

**Beschreibung**

Verfahren und Steuereinrichtung zur Steuerung der Drehzahl eines rotierenden Werkzeugs bei einer Werkzeugmaschine

Die Erfindung betrifft ein Verfahren zur Steuerung der Drehzahl eines rotierenden Werkzeugs bei einer Werkzeugmaschine. Weiterhin betrifft die Erfindung eine Steuereinrichtung zur Steuerung der Drehzahl eines rotierenden Werkzeugs bei einer Werkzeugmaschine.

Bei einer Werkzeugmaschine ist die bei der Bearbeitung des Werkstücks zu erzielende Oberflächenqualität des Werkstücks von den Schnittbedingungen abhängig.

Bei handelsüblichen Werkzeugmaschinen kann die Schnittgeschwindigkeit einer Schneide eines Werkzeugs, mit der eine spanende Bearbeitung eines Werkstücks erfolgen soll, vor dem Bearbeitungsvorgang vorgegeben werden. Unter Kenntnis des Werkzeugsradius lässt sich die Drehzahl 0ermitteln, mit der das Werkzeug rotieren muss, um die gewünschte Schnittgeschwindigkeit zu realisieren. Die aus der Schnittgeschwindigkeit und dem Werkzeugradius sich ergebende Drehzahl des Werkzeugs wird bei handelsüblichen Werkzeugmaschinen einmal vor Beginn der Bearbeitung berechnet. Anschließend ist die Drehzahl bei der Bearbeitung des Werkstücks nicht mehr an gegebenenfalls sich ändernde Schnittbedingungen anpassbar, d.h. veränderbar.

Es sind weiterhin Programmiersystemlösungen bekannt, mit denen sich eine für die Bearbeitung des Werkstücks optimale Drehzahl des Werkzeugs ermitteln lässt.

Es hat sich gezeigt, dass eine hohe Oberflächenqualität des Werkstücks erzielt werden kann, wenn die Schnittgeschwindigkeit bei der Bearbeitung des Werkstücks keine stärkeren Schwankungen aufweist und insbesondere möglichst konstant ist.

Aus der Offenlegungsschrift DE 44 05 660 A1 ist ein Verfahren und eine Anordnung zum Betreiben einer spanabhebenden Werkzeugmaschine bekannt, bei denen unter Nutzung aktueller Zustandssignale ein nicht optimales Betriebsverhalten der betreffenden Werkzeugmaschine festgestellt und die Betriebsparameter derart eingestellt werden, dass ein Betreiben der Maschine unter Vermeidung instabiler Zustände gewährleistet ist. Insbesondere ist dabei eine Steuerung oder Regelung einer Schnittgeschwindigkeit vorgesehen.

Aus der Offenlegungsschrift DE 38 28 594 A1 ist eine numerisch gesteuerte Werkzeugmaschine und ein Verfahren zum Steuern eines mit dieser durchgeführten Schleifvorgangs bekannt, bei denen ein Korrektur-Bewegungsbetrag für ein Schleifwerkzeug entsprechend dem Ausmaß des Verschleißes des Schleifwerkzeugs berechnet wird.

Ferner ist aus der Patentschrift US 6,106,373 eine Schleifmaschine bekannt, bei der während der Bearbeitung eines Werkstücks sowohl das Schleifmittel als auch das Werkstück rotieren.

Es ist Aufgabe der Erfindung, eine hohe Oberflächenqualität eines Werkstücks bei der Bearbeitung des Werkstücks bei einer Werkzeugmaschine zu ermöglichen.

Diese Aufgabe wird gelöst durch ein Verfahren zur Steuerung der Drehzahl eines rotierenden Werkzeugs mit den Verfahrensschritten gemäß Anspruch 1.

Weiterhin wird diese Aufgabe gelöst durch eine Steuereinrichtung zur Steuerung der Drehzahl eines rotierenden Werkzeugs mit den Merkmalen gemäß Anspruch 3.

Vorteilhafte Ausbildungen der Erfindung ergeben sich aus den abhängigen Ansprüchen.

Vorteilhafte Ausbildungen des Verfahrens ergeben sich analog zu vorteilhaften Ausbildungen der Steuereinrichtung und umgekehrt.

Es erweist sich als vorteilhaft, wenn das Werkstück bei der Bearbeitung rotiert, wobei die Drehzahl des Werkzeugs bei der Bearbeitung des Werkstücks in Abhängigkeit von der Drehzahl des Werkstücks derart angepasst wird, dass die Schnittgeschwindigkeit innerhalb des Toleranzbereichs liegt. Durch diese Maßnahme kann eine hohe Oberflächenqualität bei Bearbeitungsvorgängen erzielt werden, bei denen sowohl das Werkzeug als auch das Werkstück bei der Bearbeitung rotieren.

Weiterhin erweist es sich als vorteilhaft, wenn die Drehzahl des Werkzeugs bei der Bearbeitung des Werkstücks in Abhängigkeit von der Drehzahl des Werkstücks und dem Abstand der Rotationsachse des Werkstücks zu dem mit der Schneide in einem Kontakt stehenden Material des Werkstücks derart angepasst wird, dass die Schnittgeschwindigkeit innerhalb des Toleranzbereichs liegt. Durch diese Maßnahme kann eine besonders hohe Oberflächenqualität bei Bearbeitungsvorgängen erzielt werden, bei denen sowohl das Werkzeug als auch das Werkstück bei der Bearbeitung rotieren.

Weiterhin erweist es sich als vorteilhaft, wenn mittels eines weiteren Werkzeugs eine weitere Bearbeitung des Werkstücks, die gleichzeitig neben der vom Werkzeug durchgeführten Bearbeitung des Werkstücks durchgeführt wird, stattfindet, wobei die Drehzahl des Werkstücks zur Realisierung einer vorgegebenen weiteren Schnittgeschwindigkeit, die eine Schneide des weiteren Werkzeugs im Bezug auf das mit der Schneide des weiteren Werkzeugs bei der Bearbeitung des Werkstücks in Kontakt stehende Material des Werkstücks aufweisen soll, entsprechend der weiteren Schnittgeschwindigkeit angepasst wird. Durch diese Maßnahme lässt sich auch bei einer gleichzeitigen Bearbeitung des Werkstücks mittels zweier Werkzeuge, die unabhängig von einender bewegt werden können, eine hohe Oberflächenqualität bei Bearbeitungsvorgängen erzielen.

Ferner erweist es sich als vorteilhaft, wenn eine bei der Bearbeitung entstehende Abnutzung der Schneide des Werkzeugs ermittelt wird und die Drehzahl des Werkzeugs in Abhängigkeit von der Abnutzung der Schneide des Werkzeugs derart angepasst wird, dass die Schnittgeschwindigkeit innerhalb des Toleranzbereichs liegt. Hierdurch ist es auch möglich, bei einer Veränderung des Werkzeugradius infolge einer Abnutzung der Schneide die Schnittgeschwindigkeit in dem gewünschten Toleranzbereich zu halten.

Weiterhin erweist es sich als vorteilhaft, wenn der Toleranzbereich in Form eines zu einem Schnittgeschwindigkeitssollwert degenerierten Toleranzbereichs vorgegeben wird, wobei die Drehzahl des Werkzeugs bei der Bearbeitung des Werkstücks derart angepasst wird, dass die Schnittgeschwindigkeit mit dem Schnittgeschwindigkeitssollwert übereinstimmt. Bei einer Vorgabe eines Schnittgeschwindigkeitssollwerts wird eine besonders gute Oberflächenqualität des Werkstücks bei der Bearbeitung des Werkstücks erzielt.

Weiterhin erweist es sich als vorteilhaft, eine Werkzeugmaschine mit der erfindungsgemäßen Steuereinrichtung auszubilden.

Ein Ausführungsbeispiel der Erfindung ist in der Zeichnung dargestellt und wird im Folgenden näher erläutert.

In der Figur sind im Rahmen eines Ausführungsbeispiels die zum Verständnis der Erfindung wesentlichen Elemente einer Werkzeugmaschine 14 schematisiert dargestellt. Die Werkzeugmaschine 14 weist einen Motor 1 auf, der eine Spindel 2 rotierend antreibt. Die Spindel 2 weist eine Werkzeugaufnahmevorrichtung 3 auf, in die ein Werkzeug 4 eingespannt ist. Solchermaßen treibt der Motor 1 das Werkzeug 4 rotierend an, was durch einen Pfeil 18 dargestellt ist. Das Werkzeug 4 rotiert dabei mit einer Drehzahl $n_1$ um die Rotationsachse D des Werkzeugs 4.

Das Werkzeug 4 weist mehrere Schneidblätter auf, wobei der Übersichtlichkeit halber nur ein Schneidblatt 5 mit einem Bezugszeichen versehen ist. Das Schneidblatt 5 weist eine im Rahmen des Ausführungsbeispiels an seinem äußeren Ende angeordnete Schneide 6 auf. Solchermaßen weist das Werkzeug 4 mehrere Schneiden auf, wobei der Übersichtlichkeit halber nur die Schneide 6 mit einem Bezugszeichen versehen ist. Die Schneidblätter können dabei, z.B. an entsprechend vorgesehenen Aufnahmen des Werkzeugs 4 montiert sein. Es ist aber auch möglich, dass das Werkzeug 4 einstückig aufgebaut ist und eine einzelne oder mehrere Schneiden aufweist. Das Werkzeug 4 weist einen Werkzeugradius $r_1$ auf, der den Abstand der Schneide 6 zur Rotationsachse D des Werkzeugs angibt, wobei, falls die Schneide 6 keinen konstanten Abstand zur Rotationsachse D aufweist, der Werkzeugradius $r_1$ der Abstand zur am weitesten von der Rotationsachse D entfernten Stelle der Schneide 6 von der Rotationsachse D ist.

Im Rahmen des Ausführungsbeispiels weist die Werkzeugmaschine 14 einen weiteren Motor 9 auf, der rotierend eine Spindel 24 antreibt. Die Spindel 24 weist eine Werkstückspannvorrichtung 8 auf, in die ein Werkstück 7 eingespannt ist. Solchermaßen treibt der Motor 1 das Werkstück 7 rotierend an, was durch einen Pfeil 17 dargestellt ist. Das Werkstück 7 rotiert dabei um die Rotationsachse R mit einer Drehzahl $n_2$.

Das gerade bei der Bearbeitung des Werkstücks durch die Schneide 5 mit der Schneide 5 in einem mechanischen Kontakt stehende Material des Werkstücks 7 weist zur Rotationsachse R einen Abstand $r_2$ auf. Über ein Motorantriebssystem 23 kann der Motor 1 und damit das Werkzeug 4 im Rahmen des Ausführungsbeispiels, entsprechend den eingezeichneten Koordinatensystem in X-, Y- oder Z-Richtung, zur Bearbeitung des Werkstücks 5 örtlich im Raum verfahren werden.

Zur Steuerung der Drehzahl $n_1$ des Werkzeugs 4, der Drehzahl $n_2$ des Werkstücks 7 sowie der Lage x, y und z des Werkzeugs 4 weist die Werkzeugmaschine 14 eine Steuereinrichtung 10 auf, die im Allgemeinen als numerische Steuerung ausgebildet ist. Zur Steuerung der Bewegung des Werkzeugs und des Werkstücks liest die Steuerung 10 ein Teileprogramm 13 ein, was in der Figur durch einen Pfeil 22 angedeutet ist, wobei das Teileprogramm 13 die zur Durchführung der Bearbeitung des Werkstücks 7 notwendigen Steuerbefehle enthält.

Anhand des Teileprogramms 13 ermittelt die Steuereinrichtung 10 Sollwerte in Form von Werkzeugdrehzahlsollwerten $n_{1soll}$, Werkstückdrehzahlsollwerten $n_{2soll}$, Lagesollwerte $x_{soll}$ für die Lage des Werkzeugs in X-Richtung, Lagesollwerte $y_{soll}$ für die Lage des Werkzeugs in Y-Richtung und Lagesollwerte $z_{soll}$ für die Lage des Werkzeugs in Z-Richtung. Die jeweiligen Sollwerte werden in einem äquidistanten Zeittakt (z.B. jede Millisekunde) als Regelsollwerte an ein Antriebssystem 11 ausgegeben. Das Antriebssystem 11 besteht aus einer Anzahl von Regeleinrichtungen und Stromrichtern zur Ansteuerung des Motors 1, des weiteren Motors 9 und des Motorantriebssystems 23. Entsprechend den von der Steuerung 10 erzeugten Sollwerten werden vom Antriebssystem 11 Ausgangsspannungen erzeugt und über schematisiert dargestellte Leitungen 12, 19 und 21 der erste Motor 1 und der weitere Motor 9 und das Motorantriebssystem 23 mit elektrischer Energie versorgt und solchermaßen angesteuert. Die Drehzahl $n_1$ des Werkzeugs 4 wird von einem Drehgeber 15 gemessen und als Regelistgröße dem Antriebssystem 11 zugeführt. Die Drehzahl $n_2$ des Werkstücks wird von einem Drehgeber 16 gemessen und als Regelistgröße dem Antriebssystem 11 zugeführt. Die Lage x, y und z des Werkzeugs 4 wird von einer in das Motorantriebssystem 23 integrierten Lagemesseinrichtung gemessen und als Regelistgröße dem Antriebssystem 11 zugeführt.

Es sei an dieser Stelle angemerkt, dass im Rahmen des Ausführungsbeispiels nur das Werkzeug 4 örtlich im Raum in Y-, Y- und Z-Richtung verfahren werden kann. Die Werkzeugmaschine kann aber z.B. auch eine Kinematik aufweisen, bei der anstatt das Werkzeug 4 das Werkstück 7 örtlich im Raum in X-, Y- und Z-Richtung verfahren werden kann oder aber dass sowohl das Werkstück 4 als auch das Werkstück 7 örtlich im Raum in X-, Y- und Z-Richtung verfahren werden können.

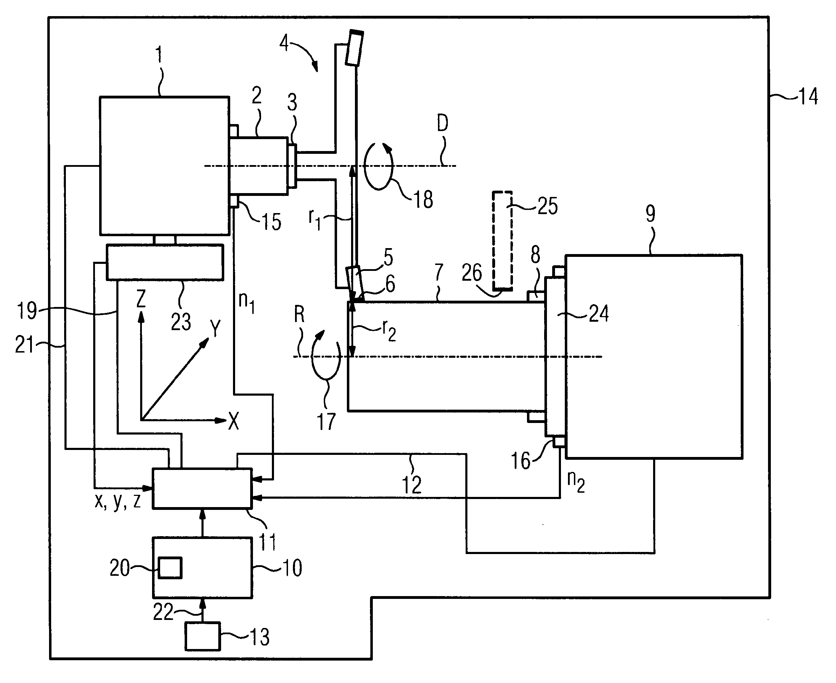

Im Rahmen einer allgemeinen Ausführungsform der Erfindung sei die Drehzahl $n_2$ des Werkstücks 7 gerade Null, d.h. das Werkstück 7 rotiert nicht und nur das Werkzeug 4 rotiert. Es sei an dieser Stelle ausdrücklich angemerkt, dass das Werkstück 7 hierbei z.B. auch auf einem z.B. feststehenden Maschinentisch unbeweglich eingespannt angeordnet sein kann. Das Element 9 in Figur 1 braucht in diesem Fall, z.B. nicht unbedingt als Motor ausgebildet sein, sondern kann z.B. als Maschinentisch ausgebildet sein, in dem das Werkstück 7 mittels der Werkstückspannvorrichtung 8 unbeweglich eingespannt ist, wobei die Spindel 24 entfällt.

Die Schnittgeschwindigkeit v der Schneide 6 in Bezug auf das mit der Schneide 6 bei der Bearbeitung des Werkstücks 7 in Kontakt stehenden Material des Werkstücks stimmt in diesem Fall mit der Umlaufgeschwindigkeit der Schneide 6 überein und ergibt sich zu:

$$v = r_1 \cdot 2\pi n_1 \qquad (1)$$

Aufgelöst nach der Drehzahl $n_1$ des Werkzeugs 4 ergibt sich:

$$n_1 = \frac{v}{r_1 2\pi} \qquad (2)$$

Im weiteren wird ein Toleranzbereich in Form eines unteren Grenzwerts $v_u$ und eines oberen Grenzwerts $v_0$, innerhalb dessen die Schnittgeschwindigkeit v der Schneide 6 in Bezug auf das mit der Schneide 6 bei der Bearbeitung des Werkstücks 7 in Kontakt stehende Material des Werkstücks 7 liegen soll, vorgegeben. Zur Erzielung einer guten Oberflächenqualität des Werkstücks wird die Drehzahl $n_1$ des Werkzeugs 4 bei der Bearbeitung des Werkstücks 7 derart laufend von der Steuereinrichtung 10 angepasst, dass die Schnittgeschwindigkeit v innerhalb des Toleranzbereichs liegt, d.h. das für die Schnittgeschwindigkeit gilt:

$$v_u \ < \ v \ < \ v_o \qquad (3)$$

Die Steuereinrichtung 10 ermittelt hierzu anhand der Beziehung 2 und dem vorgegebenen Toleranzbereich entsprechende Werkzeugdrehzahlsollwerte $n_{1soll}$ und gibt diese an das Antriebssystem 11 als Regelsollwerte aus.

Im Gegensatz zum Stand der Technik wird also nicht wie beim Stand der Technik vor der Bearbeitung des Werkstücks einmalig aus der Schnittgeschwindigkeit mittels des Werkzeugradius $r_1$ die für die Realisierung der Schnittgeschwindigkeit v notwendige Drehzahl $n_1$ des Werkzeugs berechnet, sondern dies wird laufend bei der Bearbeitung, d.h. während der Bearbeitung des Werkstücks getan. Solchermaßen wird erfindungsgemäß die Schnittgeschwindigkeit der Schneide laufend an die bei der Bearbeitung des Werkstücks gerade auftretenden Schnittbedingungen angepasst. Eine solche Änderung der Schnittbedingung kann z.B. auftreten, wenn sich die Schneide 6 bei der Bearbeitung des Werkstücks abnutzt und sich so z.B. der Werkzeugradius $r_1$ bei der Bearbeitung laufend verkleinert.

Zur Ermittelung der Abnutzung i der Schneide weist die Steuereinrichtung 10 eine Abnutzungsermittlungseinheit 20 auf, die bei der Bearbeitung des Werkstücks laufend die Abnutzung i der Schneide ermittelt und anhand der Abnutzung der Schneide den aus der Abnutzung resultierenden verkleinerten aktuellen Werkzeugradius $r_1$ ermittelt.

Der aktuelle Werkzeugradius $r_1$ ergibt sich z.B. unter Berücksichtigung der Abnutzung

$$i = a \cdot t \qquad (4)$$

zu:

$$r_1 = r_0 - a \cdot t \qquad (5)$$

Dabei ist $r_0$ der ursprüngliche Werkzeugradius, der z.B. vom Hersteller des Werkzeugs angegeben wird, wenn das Werkzeug neu und unbenutzt ist. Der Abnutzungsfaktor a gibt an wie stark sich die Schneide bei der Bearbeitung abnutzt und kann z.B. empirisch ermittelt werden und t ist die Bearbeitungszeit der Bearbeitung, die mit der Schneide bisher durchgeführt wurde. Der ursprüngliche Werkzeugradius, sowie der Abnutzungsfaktor a wird der Abnutzungsermittlungseinheit 20 z.B. vom Anwender vorgegeben. Die Bearbeitungszeit t wird von der Steuereinrichtung 10 intern ermittelt und abgespeichert.

Anhand des solchermaßen aktualisierten Werkzeugradius $r_1$ wird bei der Bearbeitung des Werkstücks die Drehzahl $n_1$ des Werkzeugs von der Steuereinrichtung 10 derart angepasst, dass die Schnittgeschwindigkeit innerhalb des vorgegebenen Toleranzbereichs liegt.

Die Steuereinrichtung 10 ermittelt hierzu anhand der Beziehung 2, der Beziehung 5 und dem vorgegebenen Toleranzbereich entsprechende Werkzeugdrehzahlsollwerte $n_{1soll}$ und gibt diese an das Antriebssystem 11 als Regelsollwerte aus.

Im Rahmen einer vorteilhaften Ausbildung der Erfindung rotiert nun, wie in Figur 1 dargestellt, das Werkstück 7, angetrieben vom Motor 9, mit einer Drehzahl $n_2$. Die Schnittgeschwindigkeit v der Schneide 6 in Bezug auf das mit der Schneide 6 bei der Bearbeitung des Werkstücks 7 in Kontakt stehende Material des Werkstücks 7 ergibt sich in diesem Fall, im Falle dass das Werkzeug und das Werkstück eine gleichsinnige Rotationsrichtung aufweisen, so dass sich die Umlaufgeschwindigkeit der Schneide und die Umlaufgeschwindigkeit des mit der Schneide in Kontakt stehende Material des Werkstücks addieren zu:

$$v = r_1 \cdot 2\pi n_1 + r_2 \cdot 2\pi n_2 \qquad (6)$$

und im Falle einer gegensinnigen Rotationsrichtung des Werkzeugs und des Werkstücks zu:

$$v = r_1 \cdot 2\pi n_1 - r_2 \cdot 2\pi n_2 \qquad (7)$$

Die Umfangsgeschwindigkeit ($r_2 * 2 * \pi * n_2$), mit der das Material an der Kontaktstelle zur Schneide 6 um die Rotationsachse R rotiert, addiert sich oder subtrahiert sich, je nach Rotationsrichtung des Werkstücks in Bezug auf die Rotationsrichtung des Werkzeugs, zur Umlaufgeschwindigkeit ($r_1 * 2 * \pi * n_1$) der Schneide 6, mit der die Schneide 6 um die Rotationsachse D rotiert. Wenn nun z.B. sich die Schnittbedingung ändert, da sich die Drehzahl $n_2$ des Werkstücks 7 verändert, so wird von der Steuereinrichtung 10 die Drehzahl $n_1$ des Werkzeugs 4 derart angepasst, d.h. verändert, dass die Schnittgeschwindigkeit v innerhalb des vorgegebenen Toleranzbereichs liegt. Wird z.B. die Drehzahl $n_2$ verringert, so wird bei einer gleichsinnigen Rotationsrichtung entsprechend der Beziehung

$$n_1 = \frac{v - r_2 \cdot 2\pi n_2}{r_1 \cdot 2\pi} \qquad (8)$$

die Drehzahl $n_1$ erhöht, so dass die Schnittgeschwindigkeit v wieder innerhalb des vorgegebenen Toleranzbereichs liegt und bei einer gegensinnigen Rotationsrichtung entsprechend der Beziehung

$$n_1 = \frac{v + r_2 \cdot 2\pi n_2}{r_1 \cdot 2\pi} \qquad (9)$$

die Drehzahl $n_1$ erniedrigt, so dass die Schnittgeschwindigkeit v wieder innerhalb des vorgegebenen Toleranzbereichs liegt.

Die Steuereinrichtung 10 ermittelt hierzu anhand der Beziehung 8 oder 9 und dem vorgegebenen Toleranzbereich entsprechende Werkzeugdrehzahlsollwerte $n_{1soll}$ und gibt diese an das Antriebssystem 11 als Regelsollwerte aus.

Der Abstand $r_2$ ergibt sich dabei aus der Geometrie des Werkstücks 7.

Eine solche Änderung der Drehzahl $n_2$ des Werkstücks 7 kann sich z.B. ergeben werden, wenn z.B. mittels eines weiteren Werkzeugs 25 (in der Figur gestrichelt gezeichnet angedeutet) eine weitere z.B. spanende Bearbeitung des Werkstücks 7, die parallel, d.h. gleichzeitig neben der vom Werkzeug 4 durchgeführten Bearbeitung des Werkstücks 7 durchgeführt wird, stattfindet und die Drehzahl $n_2$ des Werkstücks zur Realisierung einer gewünschten weiteren Schnittgeschwindigkeit, die eine Schneide 26 des weiteren Werkzeugs 25 im Bezug auf das mit der Schneide 26 des weiteren Werkzeugs 25 bei der Bearbeitung des Werkstücks 7 in Kontakt stehende Material des Werkstücks 7 aufweisen soll, entsprechend der gewünschten weiteren Schnittgeschwindigkeit angepasst wird. Der Übersichtlichkeit halber ist dabei in der Figur das zur Bewegung des weiteren Werkzeugs 25 notwenige Motorantriebssystem nicht mehr dargestellt. Die Bewegung des weiteren Werkzeugs 25 wird dabei ebenso wie die Bewegung des Werkzeugs 4 von der Steuereinrichtung 10 mittels des Teileprogramms 13 gesteuert. Es sei dabei angemerkt, das selbstverständlich auch das Werkzeug 25 mehrere Schneiden aufweisen kann.

Selbstverständlich kann auch bei dieser Ausbildung der Erfindung, genau wie schon oben beschrieben, eine bei der Bearbeitung entstehende Abnutzung der Schneide ermittelt werden und die Drehzahl $n_1$ des Werkzeugs 4 in Abhängigkeit von der Abnutzung i der Schneide 6 derart von der Steuereinrichtung 10 angepasst werden, dass die Schnittgeschwindigkeit innerhalb des Toleranzbereichs liegt. Solchermaßen kann die Drehzahl des Werkzeugs 4 bei der Bearbeitung des Werkstücks 7 in Abhängigkeit von der Drehzahl $n_2$ des Werkstücks 7 und der Abnutzung i der Schneide des Werkstücks 7 derart von der Steuereinrichtung 10 angepasst werden, dass die Schnittgeschwindigkeit innerhalb des Toleranzbereichs liegt.

Im Rahmen des Ausführungsbeispiels wird der Toleranzbereich innerhalb des Teileprogramms 13 vorgegeben. Alternativ kann dieser aber z.B. auch vorgegeben werden, indem er über eine in Figur 1 der Übersichtlichkeit halber nicht mehr dargestellte mit der Steuereinrichtung 10 verbundene Bedieneinrichtung z.B. vom Anwender eingegeben wird.

Die Steuereinrichtung 10 ermittelt hierzu anhand der Beziehung 8 oder 9 und der Beziehung 5 und dem vorgegebenen Toleranzbereich entsprechende Werkzeugdrehzahlsollwerte $n_{1soll}$ und gibt diese an das Antriebssystem 11 als Regelsollwerte aus.

Es sein an dieser Stelle angemerkt, dass im Sinne der vorliegenden Erfindung der Toleranzbereich auch so eng gewählt werden kann, dass dieser im Extremfall zu einem Schnittgeschwindigkeitssollwert den die Schnittgeschwindigkeit annehmen soll degeneriert. Wenn der Toleranzbereich sehr eng gewählt wird oder insbesondere zu einem Schnittgeschwindigkeitssollwert degeneriert, wird die Drehzahl des Werkzeugs bei der Bearbeitung des Werkstücks derart angepasst, dass die Schnittgeschwindigkeit konstant ist. Es sei dabei angemerkt, dass im Sinne der vorliegenden Erfindung dabei unter dem Begriff "konstant" keine absolute mathematische Konstanz zu verstehen ist, sondern dass selbstverständlich geringfügige Schwankungen der Schnittgeschwindigkeit, welche z.B. regelungstechnisch bedingt, steuerungstechnisch bearbeitungsprozessbedingt auftreten können, immer noch auftreten können.

Weiterhin wird, wenn der Toleranzbereich zu einem Schnittgeschwindigkeitssollwert degeneriert, die Drehzahl des Werkzeugs bei der Bearbeitung des Werkstücks derart angepasst, dass die Schnittgeschwindigkeit mit dem Schnittgeschwindigkeitssollwert übereinstimmt. Der Toleranzbereich wird in diesem speziellen Fall in Form eines zu einem Schnittgeschwindigkeitssollwert degenerierten Toleranzbereichs vorgegeben, wobei der Schnittgeschwindigkeitssollwert selbstverständlich bei allen Ausbildungen der Erfindung vorgegeben werden kann.

**Patentansprüche**

1.  Verfahren zur Steuerung der Drehzahl ($n_1$) eines rotierenden Werkzeugs (4) bei einer Werkzeugmaschine (14), wobei das Werkzeug (4) eine Schneide (6) aufweist, die bei einer von der Schneide (6) durchgeführten Bearbeitung eines Werkstücks (7) mit dem Werkstück(7) in Kontakt steht, wobei ein Toleranzbereich vorgegeben wird, innerhalb dessen die Schnittgeschwindigkeit (v) der Schneide (6) im Bezug auf das mit der Schneide (6) bei der Bearbeitung des Werkstücks (7) in Kontakt stehende Material des Werkstücks (7) liegen soll, wobei eine bei der Bearbeitung entstehende Abnutzung der Schneide (6) des Werkzeugs (4) ermittelt wird und das Werkstück (4) bei der Bearbeitung rotiert,
    **dadurch gekennzeichnet, dass** die Drehzahl ($n_1$) des Werkzeugs (4) bei der Bearbeitung des Werkstücks (7) in Abhängigkeit von der Abnutzung der Schneide (6) des Werkzeugs (4), der Drehzahl ($n_2$) des Werkstücks (7) und dem Abstand ($r_2$) der Rotationsachse (R) des Werkstücks (7) zu dem mit der Schneide (5) in einem Kontakt stehenden Material des Werkstücks (7) derart angepasst wird, dass die Schnittgeschwindigkeit (v) innerhalb des Toleranzbereichs liegt.

2.  Verfahren nach Anspruch 1,
    **dadurch gekennzeichnet, dass** mittels eines weiteren Werkzeugs (25) eine weitere Bearbeitung des Werkstücks (7), die gleichzeitig neben der vom Werkzeug (4) durchgeführten Bearbeitung des Werkstücks (7) durchgeführt wird, stattfindet, wobei die Drehzahl ($n_2$) des Werkstücks (7) zur Realisierung einer vorgegebenen weiteren Schnittgeschwindigkeit, die eine Schneide (26) des weiteren Werkzeugs (25) im Bezug auf das mit der Schneide des weiteren Werkzeugs (25) bei der Bearbeitung des Werkstücks (7) in Kontakt stehende Material des Werkstücks (7) aufweisen soll, entsprechend der weiteren Schnittgeschwindigkeit angepasst wird.

**3.** Steuereinrichtung (10) zur Steuerung der Drehzahl ($n_1$) eines rotierenden Werkzeugs (4) bei einer Werkzeugmaschine (14) und zur Durchführung eines Verfahrens nach Anspruch 1 oder 2, wobei das Werkzeug (4) eine Schneide aufweist, die bei einer von der Schneide (6) durchgeführten Bearbeitung eines Werkstücks (7) mit dem Werkstück (7) in Kontakt steht, wobei der Steuereinrichtung (10) ein Toleranzbereich vorgebbar ist, innerhalb dessen die Schnittgeschwindigkeit (v) der Schneide (6) im Bezug auf das mit der Schneide (6) bei der Bearbeitung des Werkstücks (7) in Kontakt stehende Material des Werkstücks (7) liegen soll, wobei die Steuereinrichtung (10) eine Abnutzungsermittlungseinheit (20) umfasst, die eine bei der Bearbeitung entstehende Abnutzung der Schneide (6) des Werkzeugs (4) ermittelt, und wobei das Werkstück (4) bei der Bearbeitung rotiert, **dadurch gekennzeichnet, dass** mittels der Steuereinrichtung (10) die Drehzahl ($n_1$) des Werkzeugs (4) bei der Bearbeitung des Werkstücks (7) in Abhängigkeit von der Abnutzung der Schneide (6) des Werkzeugs (4), der Drehzahl ($n_2$) des Werkstücks (7) und dem Abstand ($r_2$) der Rotationsachse (R) des Werkstücks (7) zu dem mit der Schneide (5) in einem Kontakt stehenden Material des Werkstücks (7) derart anpassbar ist, dass die Schnittgeschwindigkeit (v) innerhalb des Toleranzbereichs liegt.

**4.** Werkzeugmaschine, wobei die Werkzeugmaschine (14) eine Steuereinrichtung (10) nach Anspruch 3 aufweist.

**Claims**

**1.** Method for controlling the rotation speed ($n_1$) of a rotating tool (4) in a machine tool (14), wherein the tool (4) comprises a blade (6), which is in contact with the workpiece (7) when processing a workpiece (7) using the blade (6), wherein a tolerance range is predetermined, within which the cutting speed (v) of the blade (6) should lie in respect of the material of the workpiece (7) in contact with the blade (6) when processing a workpiece (7), wherein wear to the blade (6) of the tool (4) brought about during the processing is determined and the tool (4) rotates during the processing, **characterised in that** the rotation speed ($n_1$) of the tool (4), when processing a workpiece (7), is adjusted as a function of the wear of the blade (6) of the tool (4), the rotation speed ($n_2$) of the workpiece (7) and the distance ($r_2$) of the axis of rotation (R) of the workpiece (7) relative to the material of the workpiece (7) in contact with the blade (5) such that the cutting speed (v) lies within the tolerance range.

**2.** Method according to claim 1, **characterized in that** a further processing of the workpiece (7), which is performed at the same time as the processing of the workpiece (7) performed by the tool (4), takes place by means of a further tool (25), wherein the rotation speed ($n_2$) of the workpiece (7) is adjusted according to the further cutting speed in order to realise a predetermined further cutting speed, which is to comprise a blade (26) of the further tool (25) in respect of the material of the workpiece (7) in contact with the blade of the further tool (25) when processing the workpiece (7).

**3.** Control device (10) for controlling the rotation speed ($n_1$) of a rotating tool (4) in a machine tool (14) and for implementing a method according to claim 1 or 2, wherein the tool (4) includes a blade, which, when processing a workpiece (7) using the blade (6), is in contact with the workpiece (7), wherein a tolerance range can be predetermined to the control device (10), within which the cutting speed (v) of the blade (6), is to lie in respect of the material of the workpiece (7) in contact with the blade (6) when processing the workpiece (7), wherein the control device (10) includes a wear determination unit (20), which determines wear of the blade (6) of the tool (4) brought about by processing, and wherein the workpiece (4) rotates during the processing, **characterized in that** the rotation speed ($n_1$) of the tool (4) during the processing of the workpiece (7) can be adjusted by means of the control device (10) as a function of the wear of the blade (6) of the tool (4), the rotation speed ($n_2$) of the workpiece (7) and the distance ($r_2$) of the axis of rotation (R) of the workpiece (7) relative to the material of the workpiece (7) in contact with the blade (5), such that the cutting speed (v) lies within the tolerance range.

**4.** Machine tool, wherein the machine tool (14) comprises a control device (10) according to claim 3.

**Revendications**

1. Procédé de commande de la vitesse ( $n_1$ ) de rotation d'un outil ( 4 ) tournant dans une machine-outil ( 14 ), dans lequel l'outil ( 4 ) a un tranchant ( 6 ) qui, lors d'un usinage d'une pièce ( 7 ) effectué par le tranchant ( 6 ), est en contact avec la pièce ( 7 ), une plage de tolérance étant prescrite dans laquelle la vitesse ( v ) de coupe du tranchant ( 6 ) doit être en relation avec le matériau de la pièce ( 7 ) en contact avec le tranchant ( 6 ) lors de l'usinage de la pièce ( 7 ), une usure, se produisant lors de l'usinage, du tranchant ( 6 ) de l'outil ( 4 ) étant déterminée et la pièce ( 4 ) tournant lors de l'usinage,
   **caractérisé en ce que** l'on adapte la vitesse ( $n_1$ ) de rotation de l'outil ( 4 ) lors de l'usinage de la pièce ( 7 ) en fonction de l'usure du tranchant ( 6 ) de l'outil ( 4 ), de la vitesse ( $n_2$ ) de rotation de la pièce ( 7 ) et de la distance ( $r_2$ ) de l'axe ( R ) de rotation de la pièce ( 7 ) au matériau de la pièce ( 7 ) en contact avec le tranchant ( 6 ) de manière à ce que vitesse ( v ) de coupe reste dans la plage de tolérance.

2. Procédé suivant la revendication 1, **caractérisé en ce qu'**au moyen d'un autre outil ( 25 ) a lieu un autre usinage de la pièce ( 7 ), qui s'effectue en même temps à côté de l'usinage de la pièce ( 7 ) effectué par l'outil ( 4 ), la vitesse ( $n_2$ ) de rotation de la pièce ( 7 ), pour la réalisation d'une autre vitesse de coupe prescrite que doit avoir un tranchant ( 26 ) de l'autre outil ( 25 ) par rapport à la matière de la pièce ( 7 ) en contact avec le tranchant de l'autre outil ( 25 ) lors de l'usinage de la pièce ( 7 ), étant adaptée conformément à l'autre vitesse de coupe.

3. Dispositif ( 10 ) pour commander de la vitesse ( $n_1$ ) de rotation d'un outil ( 4 ) tournant dans une machine-outil ( 14 ) et pour effectuer un procédé suivant la revendication 1 ou 2, dans lequel l'outil ( 4 ) a un tranchant qui, dans un usinage d'une pièce ( 7 ) effectué par le tranchant ( 6 ), est en contact avec la pièce ( 7 ), le dispositif ( 10 ) de commande pouvant prescrire une plage de tolérance dans laquelle la vitesse ( v ) de coupe du tranchant ( 6 ) doit être en relation avec le matériau de la pièce ( 7 ) en contact avec le tranchant ( 6 ) lors de l'usinage de la pièce ( 7 ), le dispositif ( 10 ) de commande comprenant une unité ( 20 ) de détermination de l'usure, qui détermine une usure du tranchant ( 6 ) de l'outil ( 4 ) se produisant lors de l'usinage et la pièce ( 4 ) tournant lors de l'usinage,
   **caractérisé en ce que**, au moyen du dispositif ( 10 ) de commande, la vitesse ( $n_1$ ) de rotation de l'outil ( 4 ) , lors de l'usinage de la pièce ( 7 ), peut être adaptée en fonction de l'usure du tranchant ( 6 ) de l'outil ( 4 ), de la vitesse ( $n_2$ ) de rotation de la pièce ( 7 ) et de la distance ( $r_2$ ) de l'axe ( R ) de rotation de la pièce ( 7 ) au matériau de la pièce ( 7 ) en contact avec le tranchant ( 5 ) de manière à ce que la vitesse ( v ) de coupe reste dans la plage de tolérance.

4. Machine-outil dans laquelle la machine-outil ( 14 ) a un dispositif ( 10 ) de commande suivant la revendication 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4405660 A1
- DE 3828594 A1
- US 6106373 A